**Europäisches Patentamt**

**European Patent Office**

**Office européen des brevets**

(19)

(11) Veröffentlichungsnummer: **0 319 048**
**A2**

(12) # EUROPÄISCHE PATENTANMELDUNG

(21) Anmeldenummer: **88120267.5**

(22) Anmeldetag: **05.12.88**

(51) Int. Cl.⁴: **B29C 61/06 , B29C 53/10**

(30) Priorität: **04.12.87 DE 3741210**

(43) Veröffentlichungstag der Anmeldung:
**07.06.89 Patentblatt 89/23**

(84) Benannte Vertragsstaaten:
**AT BE CH ES FR GB GR IT LI LU NL SE**

(71) Anmelder: **Kühnert, Detlef M.**
**Hohler Weg 3**
**D-3402 Bördel(DE)**

(72) Erfinder: **Kühnert, Detlef M.**
**Hohler Weg 3**
**D-3402 Bördel(DE)**

(74) Vertreter: **Staeger, Sigurd, Dipl.-Ing. et al**
**Patentanwälte Dipl.-Ing. S. Staeger Dipl.-Ing.**
**Dipl.-Wirtsch.-Ing. R. Sperling Müllerstrasse**
**31**
**D-8000 München 5(DE)**

(54) **Verfahren zum Herstellen von Schrumpfhauben, Vorrichtung zu dessen Durchführung sowie Schrumpfhaube.**

(57) Bei einem Verfahren zur Herstellung von Schrumpfhauben aus einer kontinuierlichen Schlauchbahn, die von einer Düse eines Extruders abgezogen wird und an der eine Tieffalte und eine dieser Falte gegenüberliegende letztere Falte geringerer Tiefe ausgebildet sind, wird die Falte vor dem Verschweißen der seitlichen Nähte wieder aufgefaltet. Dies kann vor oder nach dem Aufschneiden der Haubenöffnung durchgeführt werden. Des weiteren ist eine Vorrichtung zum Durchführen des Verfahrens und eine Schrumpfhaube mit verdickten Seitenwänden im Öffnungsbereich angegeben.

FIG. 3

EP 0 319 048 A2

## Verfahren zum Herstellen von Schrumpfhauben, Vorrichtung zu dessen Durchführung sowie Schrumpfhaube.

Die Erfindung betrifft ein Verfahren zum Herstellen von Schrumpfhauben aus einer kontinuierlichen Schlauchbahn, die aus einem Extruder abgezogen wird und an der eine Tieffalte und eine dieser Tieffalte gegenüberliegende Gegenfalte geringerer Tiefe ausgebildet sind, wobei die einzelnen Schrumpfhauben durch taktweises Anbringen von im wesentlichen in Querrichtung verlaufenden, Y-förmigen Schweißnähten abgeteilt und die jeweiligen Grundkanten der Gegenfalte als Öffnung der Schrumpfhaube aufgeschnitten werden.

Aus der DE-OS 24 55 515 ist eine Schrumpfhaube mit Tieffalte für quaderförmige Gutstapel bekannt, bei der das Wandungsmaterial an der der Tieffalte gegenüberliegenden Seite in Form von Einschlägen nach innen zurückgeschlagen ist. Diese Einschläge verbleiben an der Schrumpfhaube und werden an ihren Seitennähten miteinander verschweißt. Hierbei kann es geschehen, daß es am eingeschlagenen Bereich der Bodenöffnung zu einer Relativbewegung zwischen den übereinanderliegenden Wandbereichen kommt und sich somit der Verbund zwischen den aufgestapelten Produkten und der Palette löst.

Aus der DE-OS 24 38 567 ist eine aus einem Seitenfaltenschlauch hergestellte Schrumpfhaube für quaderförmige Gutstapel sowie ein Verfahren zu deren Herstellung bekannt. Dabei werden in die Schlauchbahn, aus der die Schrumpfhauben gefertigt sind, nach dem Extrudieren zwei etwa gleich große Tieffalten eingelegt, wobei die Trennung zwischen den einzelnen Schrumpfhauben K-förmig ausgebildet wird und die Schweißnaht gleichzeitig die Bodennaht der Schrumpfhaube darstellt. Die Schweißnaht weise dabei zwei Abknickungen auf. Aus der DE-OS 24 57 269 ist eine als Bodenfaltenhaube ausgebildete Schrumpfhaube für quaderförmige Gutstapel bekannt, bei der die Schrumpfhauben im wesentlichen in Querrichtung aus einem extrudierten Schrumpfschlauch hergestellt werden. Die die einzelnen schrumpfhauben auf der Schlauchbahn voneinander trennenden Schweißnähte weisen eine Y-Form auf, wobei der Hauptschenkel zwei im Abstand voneinander angeordnete Schweißnähte besitzt, zwischen denen mittig der Trennschnitt ausgeführt wird, durch den die einzelnen Schrumpfhauben von dem Schlauch abgetrennt werden. Die Herstellung von Schrumpfhauben gemäß der Offenbarung der DE-OS 24 57 269 weist verschiedene Nachteile auf. So werden beispielsweise aus einer Schlauchbahn zwei in Querrichtung nebeneinander liegende Schrumpfhauben hergestellt. Auf diese Weise ist zwar eine rationelle Fertigung möglich, hinsichtlich der Abmessungen der Schrumpfhauben sind jedoch dieser Art der Ausnutzung der Schlauchbahn Grenzen gesetzt, da beispielsweise Schrumpfhauben, die über handelsübliche Großpaletten gestülpt werden, erhebliche Abmaße aufweisen. Derartig große Schrumpfhauben würden bei einer in Querrichtung nebeneinander liegenden Anordnung einen entsprechend dimensionierten Extruder mit einer entsprechend breit ausgebildeten Förder- und Schweißanlage erfordern. Darüber hinaus birgt der Transport der aus solchen großflächigen dünnwandigen Folien hergestellten Schrumpfhauben von der Schweißstation zu einer Stapelstation eine Reihe von Schwierigkeiten in sich, die zusätzliche Maßnahmen für einen reibungslosen Ablauf des Herstellvorgangs notwendig machen. Aus diesem Grunde werden in der Regel derartig große Schrumpfhauben lediglich einfach aus einer Schlauchbahn herausgearbeitet.

Eine Schlauchbahn, an der lediglich an einer Seite eine Tieffalte eingeschlagen ist, weist während ihrer Wegbahn über die Vielzahl von Umlenkrollen wegen der unterschiedlichen Spannungen entlang der sich gegenüberliegenden Seitenrändern eine Tendenz zur Faltenbildung und zum Versetzen auf. Diese Tendenzen müssen durch äußerst genaue Einstellungen der Walzen korrigiert werden, wobei jedoch häufig die Walzenaufhängung eine solche Korrekturmöglichkeit nicht aufweist.

Ist die Schweißstation nicht unmittelbar in einer Produktionslinie mit der Extruderstation zusammengestellt, so ist es erforderlich, die Schlauchbahn zunächst aufzuwickeln und den Schlauchbahnwickel der Schweißstation anzuliefern. In einem solchen Fall würde die einseitig eingeschlagene Schlauchbahn zu einem ungleichmäßigen Wickel führen, der zudem noch wesentlich weniger Bahnlänge aufnehmen kann als ein zweiseitig eingeschlagener Wickel, da infolge der vierfachen Lage auf einer Seite der Wickel mit zunehmender Bahnlänge eine extrem konische Gestalt erhält.

Der Erfindung liegt die Aufgabe zugrunde, ein Verfahren zur Herstellung von Schrumpfhauben anzugeben, mit dem auf einfache und kostengünstige Weise eine genaue Fertigung von Schrumpfhauben ohne eingeschlagenem Öffnungsrand ohne die Gefahr von Betriebsstörungen infolge ungenauer Bahnführung und Faltenbildung sichergestellt werden kann.

Die Aufgabe wird erfindungsgemäß dadurch gelöst, daß die Gegenfalte vor dem Anbringen der Schweißnähte aufgefaltet und der vorherige Falteneinschlag im aufgefalteten Zustand an der Seite gemeinsam mit dem übrigen Seitenrand verschweißt wird. Des weiteren wird eine Vorrichtung angegeben, die der Durchführung des erfindungsgemäßen Verfahrens dient.

Durch die in dem Hauptanspruch angegebenen Maßnahmen kann eine Schrumpfhaube bei einfacher Anordnung auf der Schlauchbahn mit einer Tieffalte hergestellt werden, ohne daß die Schlauchbahn infolge ungleichmäßiger Dicke an den sich gegenüberliegenden Seitenrändern dazu neigt, aus ihrem vorbestimmten Bahnweg zu laufen.

Die Schwierigkeiten hinsichtlich des Bahnwegs werden dadurch vermieden, daß die Schlauchbahn bis kurz vor der Verarbeitung, das heißt dem Anbringen der Schweißnähte auf der der Tieffalte gegenüberliegenden Seite eine Gegenfalte beibehält, die spätestens vor dem Anbringen der Seitennähte in diesem unteren Bereich wieder aufgefaltet wird. Durch diese Maßnahmen wird gewährleistet, daß der gesamte Herstellungsprozeß ungestört ablaufen kann, wobei im wesentlichen faltenfreie Schlauchbahnen und wirtschaftliche, große Transportwickel erhalten werden können.

In den Unteransprüchen zum Verfahren werden weitere vorteilhafte Maßnahmen angegeben, die in günstiger Weise den Her stellungsprozeß vereinfachen und den ungestörten Betriebsablauf sicherstellen.

Die in den Vorrichtungsansprüchen angegebenen Merkmale tragen in vorteilhafter Weise dazu bei, das erfindungsgemäße Verfahren durchzuführen.

Des weiteren wird eine Schrumpfhaube angegeben, die in vorteilhafter Weise eine sichere Verbindung zwischen einem Produktstapel und einer Produktaufnahme, beispielsweise eine Palette, gewährleistet.

Im folgenden wird die Erfindung anhand der Zeichnung näher erläutert. Es zeigen:

Fig. 1 eine schematische Darstellung einer Schlauchbahn mit einer geschweißten, jedoch noch nicht abgetrennten Schrumpfhaube,

Fig. 2 ein Ablaufdiagramm des erfindungsgemäßen Verfahrens,

Fig. 3 eine schematische Darstellung einer Produktionsstraße,

Fig. 4 eine schematische Darstellung eines Schlauchbahnturms mit zwei Schwertern zum Einlegen der Falten,

Fig. 5 eine vergrößerte Darstellung des in Fig .3 mit V gekennzeichneten Details,

Fig. 6 eine schematische Ansicht einer Einrichtung zum Auffalten der Gegenfalte,

Fig. 7 ein weiteres Ausführungsbeispiel einer Einrichtung zum Auffalten mit Saugeinrichtungen und einem Messer zum nachfolgenden Aufschneiden der Schlauchbahn,

Fig. 8 eine Einrichtung zum Auffalten der Gegenfalte wenn diese an ihrer Grundkante noch nicht aufgeschnitten ist,

Fig. 9 eine Darstellung von Ansichten der Schnitte A-A und B-B aus Fig.8, un

Fig. 10 eine Ansicht eines Schnitts durch eine Einrichtung zum Auffalten der Gegenfalte.

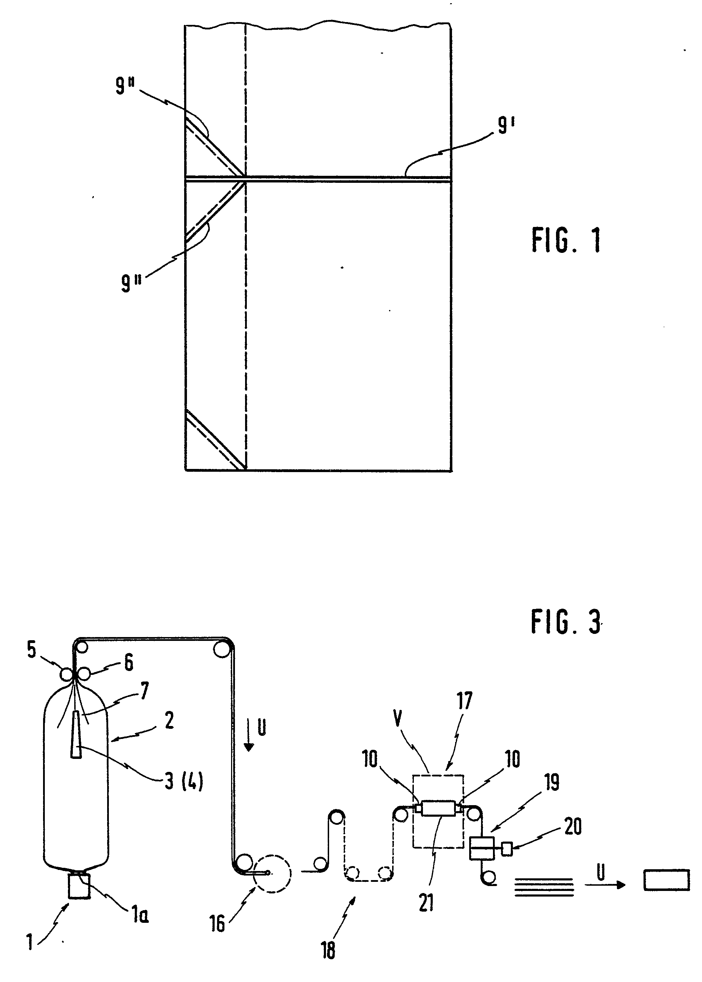

In Fig.1 ist ein Abschnit einer Schlauchbahn mit durch Y-förmige Schweißnähte abgeteilte Schrumpfhauben dargestellt. Es handelt sich dabei nicht um eine reine Y-Form, da der Hauptschenkel über den Knotenpunkt der beiden oberen Teilschenkel hinaus bis auf die Höhe der freien Enden dieser Teilschenkel verlängert ist. Dies wird weiter unten noch näher erläutert. Die Schweißnaht 9 des Hauptschenkels ist eine Doppelschweißnaht, wobei die einzelnen Schrumpfhauben zwischen diesen Nähten voneinander getrennt werden. Neben den Schweißnähten 9" der oberen Teilschenkel ist in der Fläche des durch die oberen Schenkeln definierten Bereichs eine Perforation angebracht, um später die Teile 40 und 41 des Dreiecks von der Schrumpfhaube abtrennen zu können.

Die Schrumpfhaube weist in ihrem dem Öffnungsrand benachbarten Bereich 42 eine größere Wandstärke auf als im übrigen Seitenwandbereich. Diese größere Materialdicke kann entweder durch ein leicht exzentrisches Einstellen des Düsenkerns oder durch eine entsprechende Gestaltung,z.B. Abflachung des Düsenkerns im fraglichen Düsenöffnungsbereich, erhalten werden.

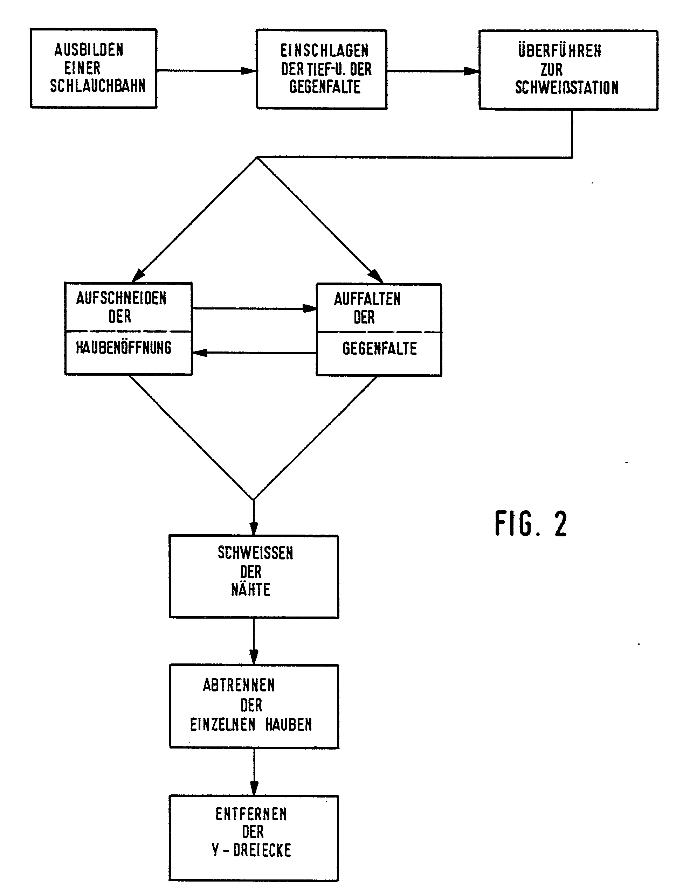

In Fig. 2 ist eine schematische Darstellung eines Flußdiagramms erkennbar, aus dem die wesentlichen Arbeitsschritte bei der Herstellung einer Schrumpfhaube gemäß der in Fig. 1 dargestellten Ausbildung zu erkennen sind.

Nach dem ersten Herstellungsschritt, dem Ausbilden einer Schlauchbahn, erfolgt das Einschlagen der Tief- und der Gegenfalte. Nach dem überführen zur Schweißstation, das evtl. unter Einschaltung des Zwischenschritts -Ausbilden eines Transportwickels- geschehen kann, ist das Ablaufdiagramm verzweigt; die beiden Verzweigungsäste stellen Alternativen in der Reihenfolge der beiden Schritte -Aufschneiden der Haubenöffnung- und -Auffalten der Gegenfalte- dar. Das Aufschneiden der Haubenöffnung kann bereits vor dem Ausbilden eines Transportwickels durchgeführt werden, es kann jedoch auch vorteilhaft sein, das Aufschneiden der Haubenöffnung so weit als möglich an das Ende des Herstellungsvorgangs zu legen, damit sich nicht evtl. die aufeinanderliegenden Folienbahnen der Schlauchbahn während des Durchlaufs auf den Walzen oder durch die verschiedenen Fertigungsstationen verschieben. Jedenfalls hat das Aufschneiden der Haubenöffnung und das Auffalten der Gegenfalte vor dem Schweißen der seitlichen Verbindungsnähte, d.h. der Schweißnähte des Hauptschenkels der Y-Naht zu erfolgen. Nach dem Schweißvorgang erfolgt das Abtrennen der einzelne Hauben, diesem Arbeitsvorgang schließt sich, nachdem die Hauben evtl. einen weiteren Transportweg zurückgelegt haben, das Entfernen der halben Y-Dreiecke an.

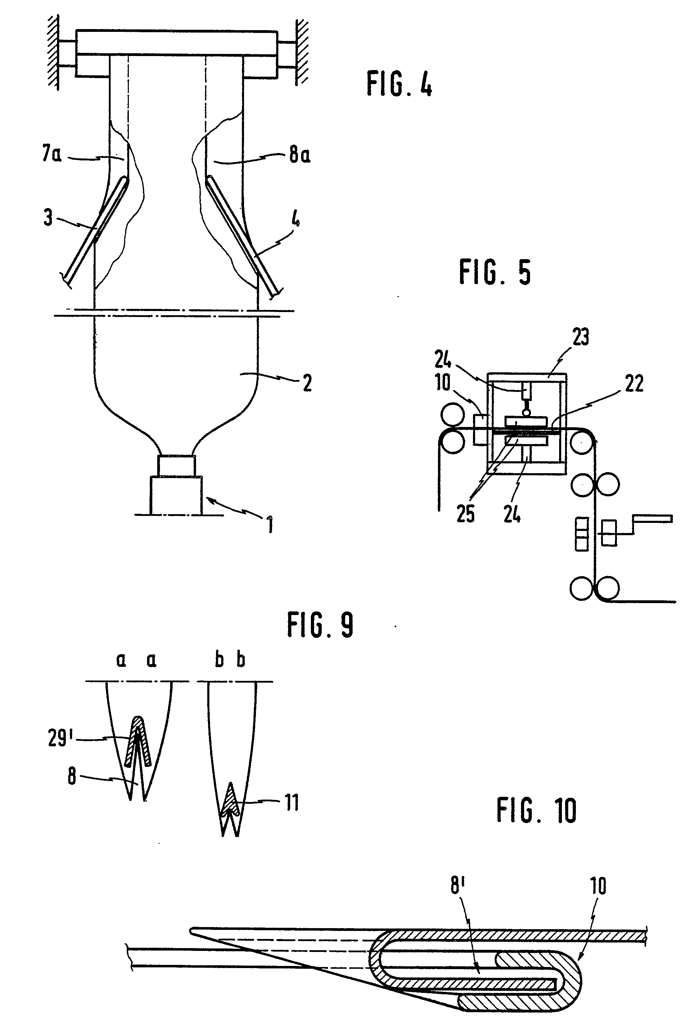

In Fig. 3 ist der Herstellungsablauf einer Produktionsstraße für eine Schrumpfhaube schematisch dargestellt. Aus einem Extruder 1 mit einer Extruderdüse 1a wird eine Schlauchbahn 2 geblasen, die entsprechend der üblichen Herstelltechnik ohne Zuhilfenahme einer äußeren Form oder einer zusätzlichen Kühlung frei an der Umgebungsluft abkühlt. Im oberen Bereich der zwischen fünf und zehn Meter hohen Schlauchsäule wird die Schlauchbahn durch Abzugswalzen 5 und 6 zu einer eng aufeinanderliegenden Folienschlauchbahn zusammengelegt. In Prozeßrichtung vor den Abzugswalzen 5 und 6 sind im vorliegenden Fall zwei Schwerter zum Einlegen von Falten angeordnet. In Fig.3 ist lediglich ein Schwert zu erkennen, das eine Tieffalte in den Schlauch einlegt. Hierzu ragt das jeweilige Schwert 3 oder 4 einer vorbestimmten Tiefe schräg in die Schlauchbahn hinein und erzeugt in den Falten eine Grundkante 7a bzw. 8a, sowie zwei Außenkanten. Die Schlauchbahn wird so mit bereits in gefaltetem Zustand von den beiden Abzugswalzen 5 und 6 abgezogen. Nach verschiedenen Umlenkwalzen, die die Schlauchbahn auf das Niveau der nächsten Station der Produktionsstraße bringen, erfolgt entweder ein Aufwickeln der gefalteten Schlauchbahn zu einem Wickel 16 oder es wird die Schlauchbahn unmittelbar in die nächste Produktionsstation eingeführt.

Hierbei handelt es sich um eine kombinierte Schweiß- und Trennvorrichtung 17. Dieser kombinierten Schweiß- und Trennvorrichtung ist in der Regel eine aus mehreren Walzen bestehende Puffereinrichtung vorgeschaltet, die zum einen als Speicher dient und zum anderen einen Ausgleich von Spannungen in der Bahn herbeiführen soll.

Die kombinierte Schweiß- und Trennvorrichtung 17 weist im vorliegenden Fall zwei Schweißstationen auf, da zur Durchführung des Verfahrens eine bereits sich im Betrieb befindliche Anlage verwendet werden soll, die quer zur Bahnrichtung verlaufende geradlinige Schweißnähte erzeugt. Diese Schweißeinrichtung 19 besteht in herkömmlicher Weise aus zwei im Abstand zueinander angeordneten Schweißbalken mit Gegenauflage und ist mit einer Trennvorrichtung 20 kombiniert. Die Trennvorrichtung 20 weist ein Messer auf, das zwischen den beiden parallel angeordneten Schweißbalken hindurchtritt und die einzelnen Hauben voneinander trennt, während sich die Schweißbalken noch in Arbeitsposition befinden.

In Transportrichtung vor dieser kombinierten Schweiß- und Trennvorrichtung 17 für den Hauptschenkel der Y-Naht, die im Zusammenhang mit Fig.1 näher erläutert wurde, ist eine Schweiß- und Perforiervorrichtung 21,22 angeordnet, mittels welcher die schräg abstehenden oberen Schenkel der Y-Schweißnaht (vergleiche Fig.1) hergestellt werden. Vor oder hinter dieser Schweiß- und Perforiereinrichtung 21,22 ist eine Einrichtung 10 zum Auffalten der Gegenfalte vorgesehen.

In Fig 4 ist schematisch die Anordnung der beiden Schwerter 3 und 4 für die Tief- bzw die Gegenfalte gezeigt.

In Fig. 5 ist das in Fig. 3 mit V gekennzeichnete Detail der Schweiß- und Perforiervorrichtung vergrößert dargestellt. Diese Vorrichtung weist in einem Rahmen 23 gehalterte Kolbenzylindereinheiten 24 auf, die bewegliche Schweißbalken 25 beaufschlagen. In gleicher Weise ist ein aus übersichtlichkeitsgründen nicht dargestelltes Perforiermesser an dem Rahmen 23 angebracht, mit dem nach oder während des Schweißprozesses unmittelbar neben der Schweißnaht 9" eine Perforation durchgeführt wird.

An dem Rahmen ist des weiteren eine Trennplatte 22 gehalten, die in die Tieffalte 7 eingeschoben wird, um während des Schweißvorgangs der oberen Y-Schenkel ein Verschweißen der jeweils aufeinanderliegenden Faltenabschnitte zu vermeiden. Diese Trennplatte 22 kann in geeigneter Weise mit Teflon beschichtet sein, wie es beispielsweise bei Haushaltsgeräten bekannt ist.

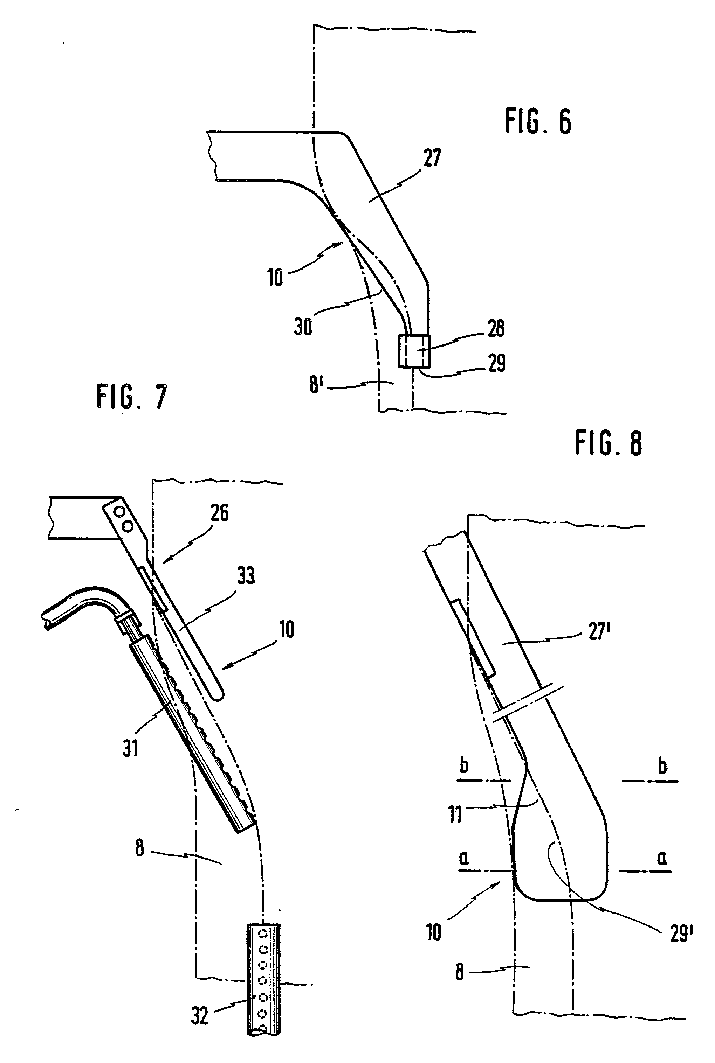

In den Figuren 6 bis 11 sind Einrichtungen 10 zum Auffalten der Gegenfalte, zum Teil kombiniert mit einer Messervorrichtung 26 zum Aufschneider der Haubenöffnung, dargestellt.

In Fig.6 weist die Einrichtung 10 zum Auffalten einen im wesentlichen gebogenen, in eine schon aufgeschnittene Schlauchbahn hineinragenden Arm 27 auf, an dessen freiem Ende durch einen Umschlag 28 ein Führungsschlitz 29 ausgebildet ist, in dem eine umgeschlagene Gegenfaltenhälfte 8 geführt ist. An dem Arm 27 ist nach außen gerichtet eine Streichkante 30 ausgebildet, die im wesentlichen in der einen Hälfte der Gegenfalte läuft und an der sich diese Hälfte 8' der Gegenfalte auffaltet. Um die gegenüberliegende Hälfte der Gegenfalte aufzufalten, kann diesem Arm 27 parallel gegenüberliegend ein weiterer Arm 27 mit Umschlag 28 und Führungsschlitz 29 vorgesehen sein. Aus Platzgründen können jedoch die der Auffaltung der einzelnen Hälften der Gegenfalte dienenden Arme 27 auch in Reihe angeordnet sein. Wie bereits erwähnt, findet die Ausführungsform einer Einrichtung zum Auffalten gemäß Fig. 6 dann Anwendung, wenn die Gegenfalte bereits in einem vorhergehenden Arbeitsgang aufgeschnitten worden ist. Dies kann, wie ebenfalls bereits erwähnt, bereits kurz nach den Abzugswalzen 5 und 6 bei der Schlauchbahnherstellung durchgeführt worden sein.

Bei der in Fig. 7 dargestellten Einrichtung 10 geschieht das Auffalten der Gegenfalte im wesentlichen berührungslos durch Saugluft. Hierzu ragt ein Saugrohr 31 in die Gegenfalte 8 hinein, in dem eine Vielzahl von im wesentlichen auf die Grundkante der Gegenfalte 8 gerichtete Saugdüsen ausgebildet sind. Mit diesem Saugrohr 31 wirken zwei weitere Saugrohre 32 und 32´ zusammen, die seitlich oberhalb bzw. unterhalb der Schlauchbahn angeordnet sind und diese in diesem Bereich nach oben bzw. nach unten auseinanderziehen, so daß sich die Gegenfalte 8 bereits teilweise öffnet. Die Anordnung der zusätzlichen Saugrohre 32 und 32´kann in einem geeigneten Abstand vor dem Saugrohr 31 oder auch das Saugrohr 31 überlappend vorgesehen sein.

Am Ausgang der Einrichtung 10 zum Auffalten ist eine Messervorrichtung 26 vorgesehen, die aus einem schräg in die Schlauchbahn hineinragenden Klingenteil geeigneter Konfiguration besteht. An dem Klingenteil kann am in die Schlauchbahn hineinragenden Bereich eine Verlängerung 33 vorgesehen sein, die eine Unterstützungsfunktion für den Auffaltvorgang ausüben kann.

Die in Fig. 8 dargestellte Ausführungsform einer Einrichtung 10 zum Auffalten findet ebenfalls Verwendung bei einer noch nicht aufgeschnittenen Schlauchbahn. Diese Einrichtung weist einen Arm 27´ ähnlich dem Arm 27 aus Fig. 6 auf, an dessen freiem, in die Schlauchbahn hineinragenden Ende ein Schlitz 29´ vorgesehen ist, dessen seitliche Begrenzungswände flügelförmig in die jeweilig zugeordneten Faltenhälften der Gegenfalte 8 eingreifen. Die Grundkante der Gegenfalte 8 läuft am Boden des Schlitzes 29´entlang einer im weiteren Verlauf an dem Arm 27´ausgebildeten rampenartigen Führung 11 und wird infolge der schräg nach außen gerichteten Anordnung des Arms 27 ebenfalls nach außen gedrückt.

In Fig .9 sind Querschnitte von entlang der Linien a-a und b-b geführten Schnitten dargestellt. Man erkennt bei a-a die ausgeprägte V-förmige Anordnung mit dem Schlitz 29´und der darin geführten Gegenfalte 8, die beim Schnitt b-b bereits größtenteils durch die in diesem Bereich noch eine Auskehlung enthaltende rampenartige Führung 11 nach außen gedrückt ist.

In Fig. 10 ist eine Schnittdarstellung einer Einrichtung zum Auffalten der Gegenfalte dargestellt, wobei hier entsprechend der Ausbildung gemäß Fig. 6 die halbe Gegenfalte 8 aufgeklappt wird. Diese wird daher von dem Umschlag 29 umgriffen, der zusammen mit dem Endabschnitt des Arms 27 den Schlitz 29bildet.

## Ansprüche

1. Verfahren zum Herstellen von Schrumpfhauben aus einer kontinuierlichen Schlauchbahn, die aus einem Extruder abgezogen wird und an der eine Tieffalte und eine dieser Tieffalte gegenüberliegende Gegenfalte geringerer Tiefe ausgebildet sind, wobei die einzelnen Schrumpfhauben durch taktweises Anbringen von im wesentlichen in Querrichtung verlaufenden, Y-förmigen Schweißnähten abgeteilt und die jeweiligen Grundkanten der Gegenfalte als Öffnung der Schrumpfhaube aufgeschnitten werden, dadurch **gekennzeichnet,** daß die Gegenfalte vor dem Anbringen der Schweißnähte aufgefaltet und die Seitenränder des vorherigen Falteneinschlags im aufgefalteten Zustand an der Seite gemeinsam mit dem übrigen Seitenrand verschweißt werden.

2. Verfahren nach Anspruch 1, dadurch **gekennzeichnet,** daß die Gegenfalte unmittelbar vor dem Schweißen der oberen Y-Schenkel aufgefaltet wird.

3. Verfahren nach Anspruch 2, dadurch **gekenn zeichnet,** daß das zwischen den oberen Y-Schenkeln entstehende Dreieck unmittelbar neben der Schweißnaht perforiert wird.

4. Vefahren nach einem der Ansprüche 1 bis 3, wobei die Schweißnähte des Hauptschenkels als Doppelnähte ausgebildet sind, dadurch **gekennzeichnet,** daß der Hauptschenkel über den Knotenpunkt der beiden oberen Y-Schenkel hinausgeführt, das Dreieck durch die Hauptschenkelschweißnähte symmetrisch geteilt und gleichzeitig mit dem Haubentrennschnitt in zwei Teildreiecke aufgeteilt wird.

5. Verfahren nach mindestens einem der Ansprüche 1 bis 4, dadurch **gekennzeichnet,** daß die Materialstärke im Bereich der Haubenöffnung dicker eingestellt wird als im übrigen Bereich der Schlauchbahn.

6. Verfahren nach Anspruch 4, dadurch **gekennzeichnet,** daß die jeweiligen Teildreiecke in einem Arbeitsgang nach dem Schweißen des Hauptschenkels entfernt werden.

7. Vorrichtung zum Herstellen von verschweißten Schrumpfhauben mit Schweißelementen zum Ausbilden einer im wesentlichen Y-förmigen seitlichen Schweißnaht und Trenneinrichtungen zum Trennen der einzelnen Schrumpfhauben voneinander, insbesondere zum Durchführen des Verfahrens nach mindestens einem der Ansprüche 1 bis 6, dadurch **gekennzeichnet,** daß in Bewegungsrichtung (U) zumindest vor dem Schweißelement (9) für den Hauptschenkel (9´) eine Einrichtung (10) zum Auffalten der Gegenfalte (8) angeordnet ist.

8. Vorrichtung nach Anspruch 1, dadurch **gekennzeichnet,** daß die Einrichtung (10) zum Auffalten der Gegenfalte (8) zumindest eine rampenartige, schräg nach außen gerichtete Führung (11) aufweist, an oder auf der die Gegenfalte (8) nach außen ausläuft.

9. Vorrichtung nach mindestens einem der Ansprüche 1 bis 8, dadurch **gekennzeichnet,** daß Saugmittel (12) vorgesehen sind, die das Auffalten der Gegenfalte zumindest unterstützen.

10. Vorrichtung zum Herstellen von Schrumpfhauben, mit einem Messer zum Aufschneiden der Haubenöffnung, nach mindestens einem der Ansprüche 7 bis 9, dadurch **gekennzeichnet,** daß das Messer (26) am oder vor dem Eingang (14) in die Einrichtung (10) zum Auffalten angeordnet ist.

11. Vorrichtung zum Herstellen einer Schrumpfhaube mit einem Messer zum Aufschneiden der Haubenöffnung, nach mindestens einem der Ansprüche 7 bis 11 dadurch **gekennzeichnet,** daß das Messer (26) am oder hinter dem Ausgang (15) der Einrichtung (10) zum Auffalten angeordnet ist.

12. Schrumpfhaube mit einer Tieffalte und mit im wesentlichen V-förmigen Seitennähten und verstärkter Haubenöffnung, dadurch **gekennzeichnet,** daß die Dicke der Seitenwände im Bereich der Haubenöffnung größer ist als im übrigen Wandbereich und die Seitenwände im angesprochenen Bereich der Haubenöffnung einfach ausgebildet sind.

FIG. 1

FIG. 3

```
┌─────────────────┐      ┌─────────────────┐      ┌─────────────────┐
│    AUSBILDEN    │      │   EINSCHLAGEN   │      │   ÜBERFÜHREN    │
│     EINER       │ ───► │  DER TIEF-U. DER│ ───► │      ZUR        │
│   SCHLAUCHBAHN  │      │   GEGENFALTE    │      │  SCHWEIßSTATION │
└─────────────────┘      └─────────────────┘      └─────────────────┘
```

```
        ┌─────────────────┐          ┌─────────────────┐
        │  AUFSCHNEIDEN   │ ───────► │   AUFFALTEN     │
        │      DER        │          │      DER        │
        ├─────────────────┤ ◄─────── ├─────────────────┤
        │  HAUBENÖFFNUNG  │          │   GEGENFALTE    │
        └─────────────────┘          └─────────────────┘
```

**FIG. 2**

```
        ┌─────────────────┐
        │   SCHWEISSEN    │
        │      DER        │
        │     NÄHTE       │
        └─────────────────┘
                │
                ▼
        ┌─────────────────┐
        │   ABTRENNEN     │
        │      DER        │
        │ EINZELNEN HAUBEN│
        └─────────────────┘
                │
                ▼
        ┌─────────────────┐
        │   ENTFERNEN     │
        │      DER        │
        │   Y - DREIECKE  │
        └─────────────────┘
```

FIG. 4

7a

8a

3

4

2

1

FIG. 5

24
10
23
22
25
24

FIG. 9

a   a          b   b

29'

8

11

FIG. 10

8'          10

FIG. 6

27

10

30

28

29

8'

FIG. 7

26

33

10

31

8

32

FIG. 8

27'

b — — b

11

a — — a

10

29'

8